# EUROPEAN PATENT APPLICATION

(11) **EP 0 574 896 A2**
(43) Date of publication of application: **22.12.1993**
(21) Application number: 93109625.9
(22) Date of filing: 16.06.1993
(51) Int. Cl.: G11B 5/31, G11B 5/39

(54) **Composite type thin film magnetic head**

(30) Priority: 17.06.1992 JP 158263/92
(71) Applicant: SONY CORPORATION, Tokyo (JP)
(72) Inventor: Suyama, Hideo, c/o SONY CORPORATION, Shinagawa-ku, Tokyo (JP); Sugawara, Fumi, c/o SONY CORPORATION, Shinagawa-ku, Tokyo (JP)
(74) Representative: TER MEER - MÜLLER - STEINMEISTER & PARTNER

(57) **Abstract**

A magnetoresistance effect type thin film magnetic reproducing head having a magnetoresistance effect element (4) and an induction type magnetic recording head (9-12) are laminated to form a reproducing gap and a recording gap separately. A magnetic layer (8) is provided close to the recording gap (g2) for defining a width of a recording track of a magnetic recording medium.

## Description

### BACKGROUND OF THE INVENTION

### Field of the Invention:

The present invention generally relates to composite type thin film magnetic heads and, more particularly, is directed to a so-called composite type thin film magnetic head having two gaps in which a magnetoresistance effect (MR) type thin film head and an induction type magnetic recording head are laminated to form a reproducing gap and a recording gap separately.

### Description of the Prior Art:

Recently, the MR type magnetic heads, which are superior in sensitivity of short wave, have likely been employed as reproducing heads for various kinds of magnetic heads such as magnetic recording and reproducing heads for hard disc driving apparatus. Further, various kinds of integrated type magnetic heads have been proposed in which recording operations are performed by the conventional induction type magnetic heads while reproducing operations are performed by MR type magnetic heads.

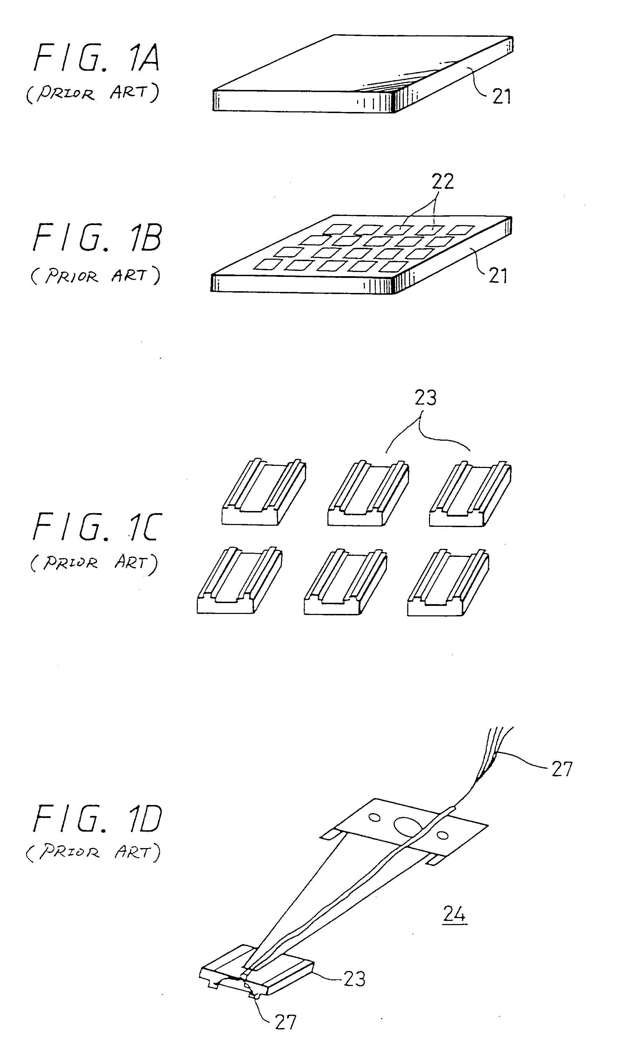

An example of thin film magnetic heads mounted on the hard disc driving apparatus will be explained with reference to FIGS. 1A to 1D showing a process sequence for forming the same. As shown in FIG. 1A, a substrate 21 formed of a sintered material such as At-Ti-C or the like is prepared, then thin film heads 22 are formed on the substrate 21 as shown in FIG. 1B through thin film forming processes including the sputtering process, the plating process, the photo-lithography process or the like. The substrate 21 is thereafter cut into pieces for every thin film head 22 and each piece with the head is processed to thereby form a slider 23 as shown in FIG. 1 C. Then, as shown in FIG. 1 D, lead wires 27 are led out from terminal electrodes of the thin film head (not shown) on the slider 23 and further the slider 23 is attached to a suspension mechanism 24. If the suspension mechanism 24 is fixed to an arm mechanism movable along a surface of a magnetic recording medium, the magnetic head of the slider can be freely moved at a desired portion on the magnetic recording medium.

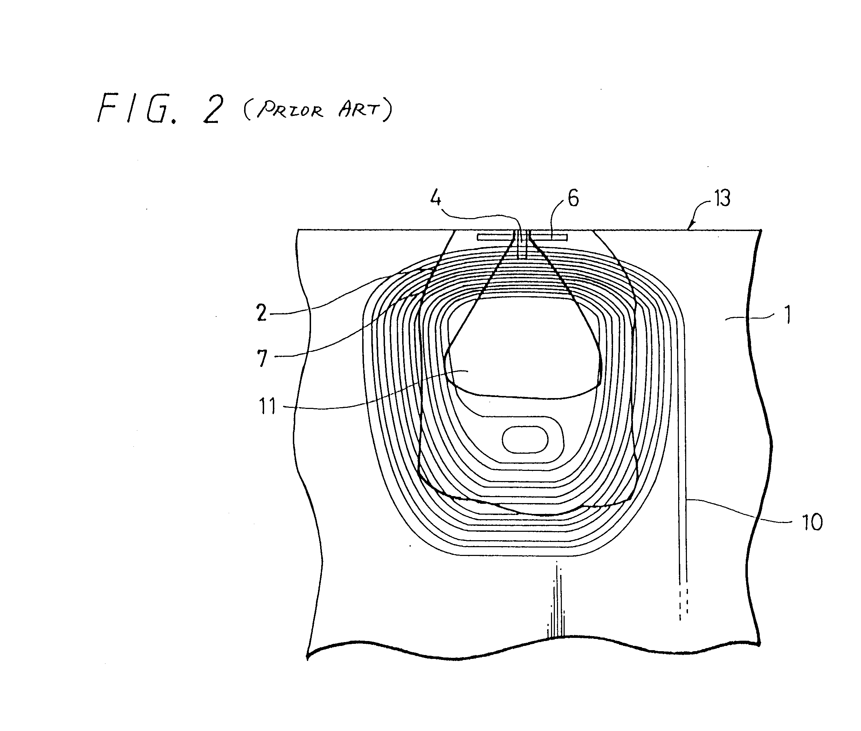

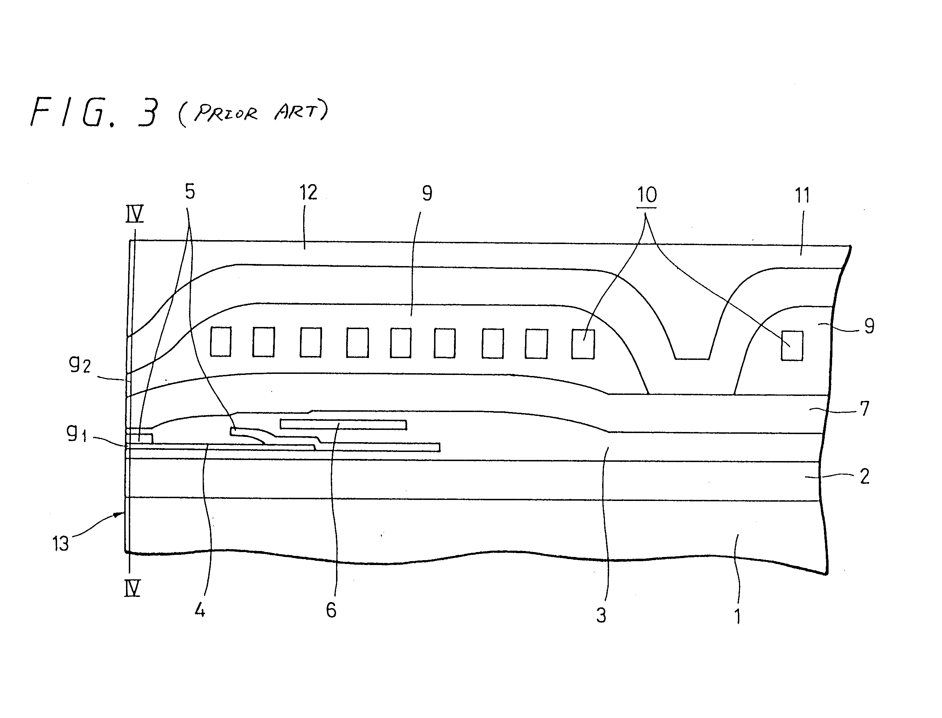

Structures of the thus constituted integrated or composite type thin film magnetic head having the MR type magnetic head and the induction type magnetic head will be described with reference to FIGS. 2 and 3 illustrating a plan view of a main part thereof and an enlarged sectional view thereof, respectively. FIG. 3 is a cross-sectional view illustrative of this composite type thin film magnetic head which is cut away along a plane perpendicular to a plane opposing to the magnetic recording medium. In this case, this composite type thin film magnetic head has two gaps, that is, a MR type reproducing magnetic gap and an induction type recording gap provided separately. As shown in FIG. 3, a first magnetic layer 2 is deposited on a substrate 1 and a magnetoresistance effect (MR) element 4 is deposited on the first magnetic layer 2 through a thin insulating layer 3.

The MR element 4 is formed by the photo-lithography process or the like so as to have such a pattern that its one end faces a plane 13 opposing to the magnetic recording medium and that it extends to a direction perpendicular to the plane 13 as shown in FIG. 2. Electrodes 5 for applying sensing current are deposited on the MR element 4 at one end of the plane 13 side thereof and the other end thereof.

Like the MR element 4, as shown in FIG. 2, a bias conductor 6 for applying bias magnetic field to the MR element 4 is formed on the MR element 4 through the insulating layer 3 so as to have a pattern extending in the direction perpendicular to the extended direction of the MR element 4. Further, a second magnetic layer 7 is deposited on the entire surface of the bias conductor 6 and so on through the insulating layer 3 so as to cover the bias conductor, so that the first and second magnetic layers 2 and 7 constitute a shield core for shielding signal magnetic field other than information to be reproduced, thereby forming a MR type magnetic reproducing head.

A head winding 10 constituted by a conduction layer is formed in a spiral configuration as shown in FIG. 2 on the second magnetic layer 7 through an insulating layer 9 by the photo-lithography process or the like. A third magnetic layer 11 is formed on the head winding 10 through the insulating layer 9 so as to cover the head winding. In this case, a thickness of the insulating layer 9 is made gradually smaller toward its front end facing on the plane 13 opposing to the magnetic recording medium, so that the second magnetic layer 7 is made closer to the third magnetic layer 11 with a desired gap width therebetween at the portion of the insulating layer 9 facing on the plane 13. The third magnetic layer 11 is connected at a rear end portion thereof apart from the plane 13 to a part of the second magnetic layer 7 through an opening provided at the insulating layer 9, thereby a closed magnetic circuit is formed by the second and third magnetic layers 7 and 11. The head winding 10 is wound around this connection portion of the second and third magnetic layers 7 and 11, whereby an induction type magnetic recording head is formed. In FIG. 3, reference numerals g1 and g2 represent a reproducing gap and a recording gap, respectively, and 12 represents a protection film.

In a case of recording information on a magnetic recording medium such as a hard disk or the like by using the thus constituted composite type thin film magnetic head, induction current is applied to the head winding 10 to generate induction magnetic field from the recording gap g2 formed between the second and third magnetic layers 7 and 11 forming a thin film magnetic core or the shield core to thereby write the information on the magnetic recording medium. In this case, a recording track width is defined by a width of the magnetic layer, in this case, a width W_{T} of the third magnetic layer 11 which is narrower between widths of the second and third magnetic layers 7 and 11 forming the recording core, that is, between widths thereof along a direction (track direction) perpendicular to a relative moving direction of the head with respect to the magnetic recording medium shown by an arrow D.

Reproduction of the information recorded on the magnetic recording medium through the thus constituted recording head is performed by detecting a change of sense current flowing through the electrodes 5 which changes depending on a change of a resistance value of the MR element 4.

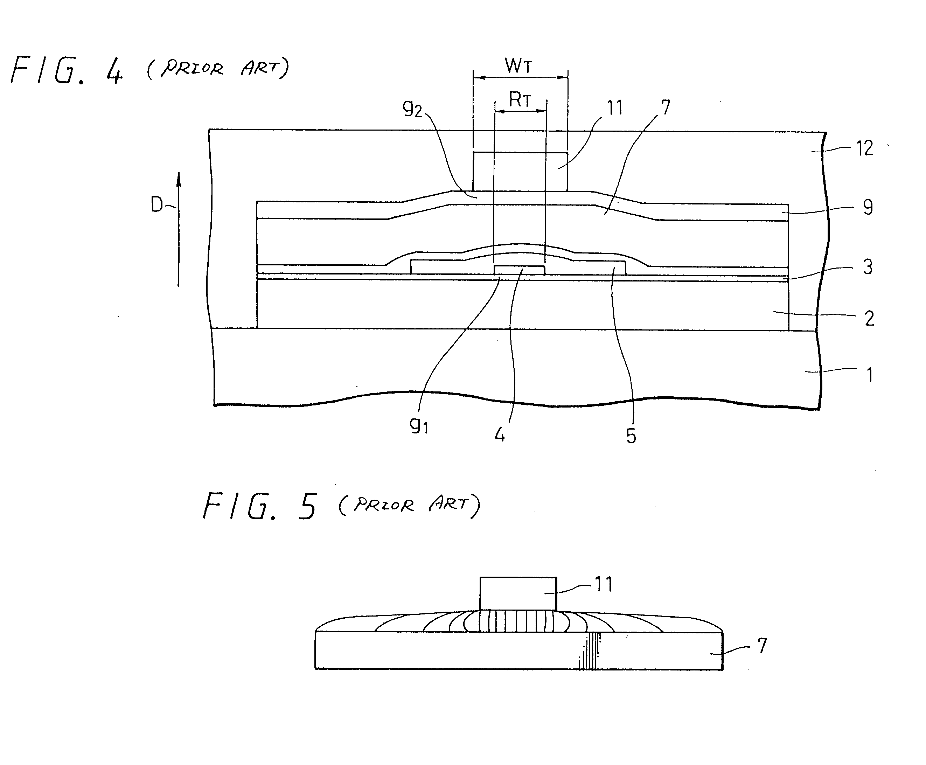

As described above, the first and second magnetic layers 2 and 7 constitute the shield core for shielding information other than information to be reproduced which is recorded on the magnetic recording medium such as a hard disk medium or the like. In this case, like the recording track width, a width effective for reproducing information recorded to the track direction on the magnetic recording medium, that is, a reproducing track width is defined by a width R_{T} of the MR element 4 exposed to the plane opposing to the hard disk medium as shown in FIG. 4.

As described above, the composite type thin film magnetic head of two gap structure having the MR type and induction type magnetic heads provides the recording track width and the reproducing track width separately. In this respect, when the recording track width W_{T} is set to be not smaller than the reproducing track width R_{T} (WT RT), the composite type thin film magnetic head is advantageous in that a signal to noise ratio of a reproduced signal is high and that reproduction error due to mechanical positioning error between the head and the hard disk medium of the hard disk driving apparatus is not likely generated.

However, since the lengths of the first and second magnetic layers 2 and 7 in the track direction are required to be sufficiently long in order to ensure the shield effect upon reproduction, the difference of length in the track direction becomes large between the second and third magnetic layers 7 and 11 as shown in FIG. 4. Therefore, the induction magnetic field upon recording operation will be spread to outer end portions of the second and third magnetic layers 7 and 11 in the track direction as shown in FIG. 5, so that the recording track width will be wider than the above-described width W_{T} of the second magnetic layer 11 in the track direction. As a consequence, there arises a problem that a width of one track for recording information on the magnetic recording medium will be spread due to the magnetic flux leakage in the track direction.

In general, it is required to form tracks on the hard disk medium as many as possible in order to increase or improve the recording density of the hard disk drive apparatus. The above-described conventional composite type thin film magnetic head, however, has a problem that the improvement or increase of the track density is difficult because there is a limitation in narrowing a width of one track as explained above.

### OBJECTS AND SUMMARY OF THE INVENTION

Therefore, it is an object of the present invention to provide an improved composite type thin film magnetic head in which the aforementioned shortcomings and disadvantages encountered with the prior art can be eliminated.

More specifically, it is an object of the present invention to provide a composite type thin film magnetic head of two gap structure having MR type and induction type magnetic heads, which can control or limit a recording track width by preventing an undesirable leakage of recording magnetic field to thereby not only improve a signal to noise ratio upon reproduction but also improve or increase recording density of a magnetic head apparatus such as a hard disk driving apparatus or the like by increasing track density of a magnetic recording medium thereof.

As an aspect of the present invention, there is provided a composite type thin film magnetic head in which a magnetoresistance effect type thin film magnetic reproducing head having a magnetoresistance effect element and an induction type magnetic recording head are laminated to form a reproducing gap and a recording gap separately, wherein a magnetic layer is provided close to the recording gap for defining a width of a recording track on a magnetic recording medium.

According to an example of the present invention, the magnetoresistance effect element is extended in the direction perpendicular to a plane of the head opposing to the magnetic recording medium.

According to an example of the present invention, the magnetoresistance effect element is constituted by two magnetic layers, at least one of which having magnetoresistance effect, which are laminated through a non-magnetic intermediate layer disposed therebetween.

According to an example of the present invention, a width in the track direction of the magnetic layer for defining the width of the recording track is substantially same as a width in the track direction of one of magnetic layers constituting a magnetic core.

According to the thus constituted composite type thin film magnetic head of the present invention, since the magnetic layer for defining the recording track width is provided close to the recording gap, undesirable leakage of magnetic field upon recording can be reliably prevented by the combination of the magnetic layer for defining the recording track width and one of the magnetic layers constituting the recording core, so that not only a signal to noise ratio upon reproduction can be improved but also a recording density of a magnetic head apparatus such as a hard disk driving apparatus can be improved or increased by increasing track density of a magnetic recording medium thereof.

Further, preferably, since the MR element is provided to be extended in the direction perpendicular to the plane of the head opposing to the magnetic recording medium, only one of electrodes of the MR element is exposed to the plane opposing a magnetic recording medium. As a consequence, such a phenomenon can be surely prevented that the electrodes at the both ends of the MR element contact with the surface of a magnetic recording medium such as a hard disk medium, for example, to thereby change a resistance value between the electrodes. Therefore, generation of noise can be suppressed.

Furthermore, preferably, since the MR element is constituted by two magnetic layers, at least one of which having magnetoresistance effect, which are laminated through the non-magnetic intermediate layer disposed therebetween, the MR element will be stable in view of magnetic energy when magnetizing states of the respective magnetic layers become inversely parallel. Consequently, no magnetic domain wall will be generated in these magnetic layers and so generation of magnetic domain is also prevented, whereby generation of noise due to Barkhausen effect can be decreased.

The above and other objects, features, and advantages of the present invention will become apparent from the following detailed description of an illustrative embodiment thereof when read in conjunction with the accompanying drawings, in which like reference numerals are used to identify the same or similar parts in the several views.

### BRIEF DESCRIPTION OF THE DRAWINGS

FIGS. 1A to 1D are perspective views showing a process sequence for forming an example of conventional thin film magnetic heads;
FIG. 2 is a schematic plan view illustrating a main portion of an example of the conventional composite type thin film magnetic head;
FIG. 3 is an enlarged schematic cross-sectional view illustrating the main part of the conventional composite type thin film magnetic head shown in FIG. 2;
FIG. 4 is an enlarged schematic cross-sectional view illustrating the main part of the conventional composite type thin film magnetic head taken along the line IV - IV in FIG. 3;
FIG. 5 is a schematic diagram showing a state of induction magnetic field generated upon recording operation in the conventional composite type thin film magnetic head;
FIG. 6 is an enlarged schematic cross-sectional view illustrating a main part of a composite type thin film magnetic head according to an embodiment of the present invention;
FIG. 7 is an enlarged schematic cross-sectional view taken through the line VII - VII in FIG. 6 and illustrating the main part of the composite type thin film magnetic head according to the embodiment of the present invention; and
FIG. 8 is a schematic diagram showing a state of induction magnetic field generated upon recording operation in the composite type thin film magnetic head according to the embodiment.

### DETAILED DESCRIPTION OF THE PREFERRED EMBODIMENT

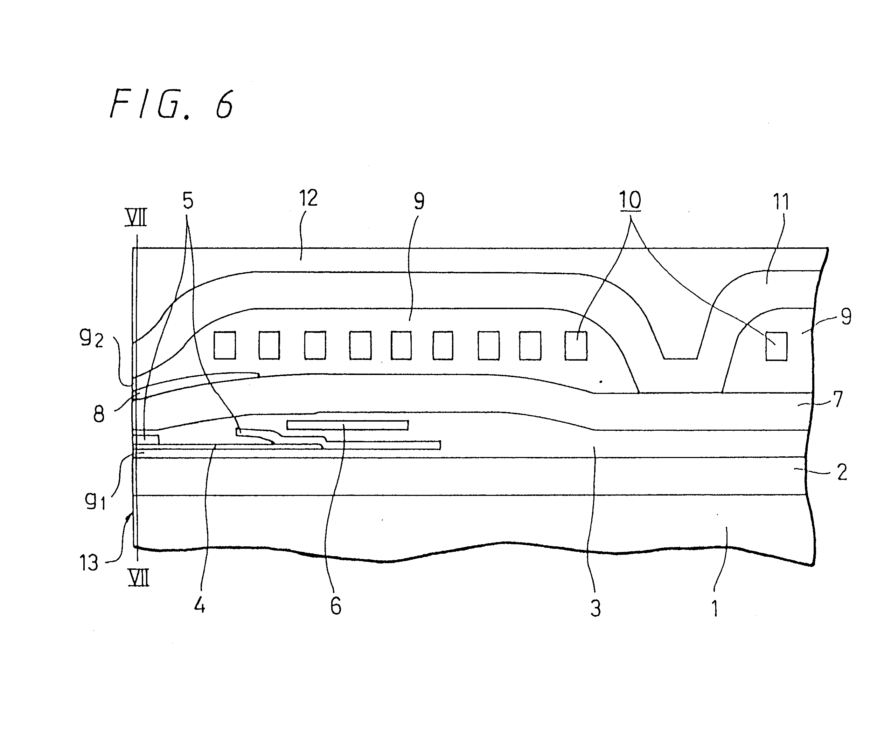

A composite type thin film magnetic head according to the embodiment will now be described with reference to FIGS. 6 to 8, in which case the embodiment of the present invention is applied to a thin film magnetic head mounted on a hard disk driving apparatus. In the figures, like parts corresponding to those of FIGS. 2 to 5 are marked with the same references and therefore need not be described in detail.

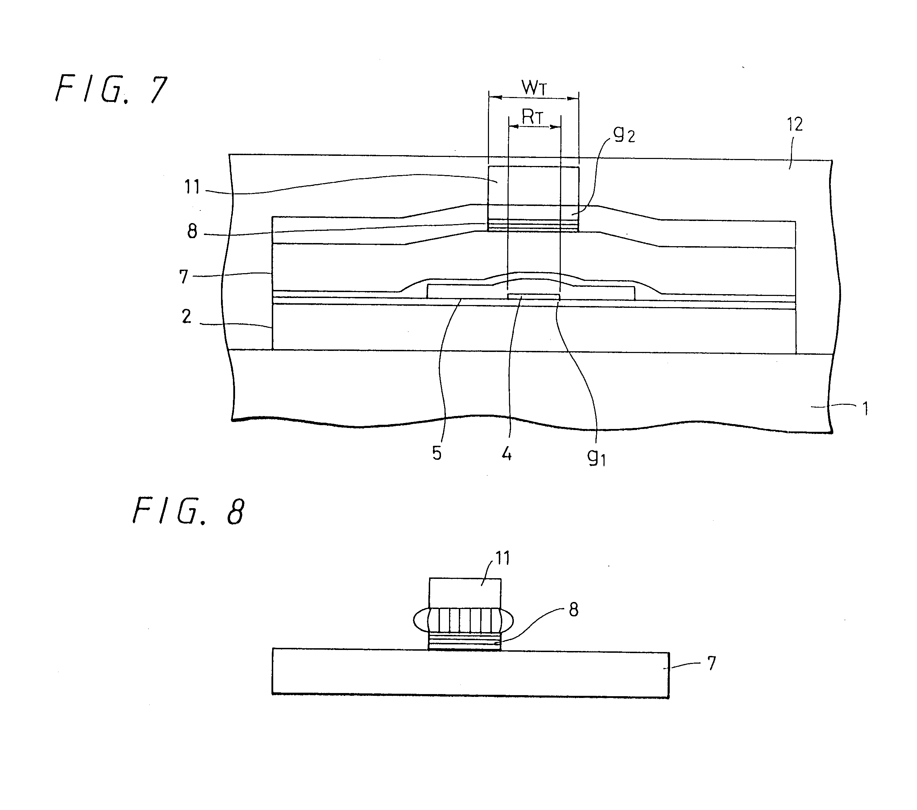

FIG. 6 shows an enlarged schematic cross-sectional view of a main part of the composite type thin film magnetic head according to the embodiment. FIG. 7 shows an enlarged schematic cross-sectional view taken through the line VII - VII in FIG. 6 and illustrating the main part of the composite type thin film magnetic head according to the embodiment of the present invention. FIG. 8 shows a state of induction magnetic field generated upon recording operation in the composite type thin film magnetic head.

Referring to FIG. 6, the first magnetic layer 2 is deposited on the substrate 1 and the MR element 4 is deposited on the first magnetic layer 2 through the thin insulating layer 3. The MR element 4 is formed by the photo-lithography process or the like so as to have a pattern that its one end faces on the plane 13 opposing to the magnetic recording medium and it extends in the direction perpendicular to the plane 13 like the conventional composite type thin film magnetic head shown in FIG. 2. The electrodes 5 for applying sensing current are deposited on the MR element 4 at one end of the plane 13 side thereof and the other end thereof, respectively. Like the MR element 4, the bias conductor 6 for applying bias magnetic field to the MR element 4 is formed on the MR element 4 through the insulating layer 3 so as to have a pattern extending in the direction perpendicular to the extended direction of the MR element 4.

Further, the second magnetic layer 7 is deposited on the entire surface of the bias conductor 6 through the insulating layer 3 so as to cover the bias conductor 6, so that the first and second magnetic layers 2 and 7 constitute a shield core for shielding signal magnetic field other than information to be reproduced, whereby a MR type magnetic reproducing head is formed.

According to the embodiment, a magnetic layer 8 for defining the width of the recording track is deposited at a portion above the second magnetic layer 7 facing the plane 13 opposing to the magnetic recording medium by the sputtering process or the plating process or the like in the same manner as other magnetic layers, and then processed to have a desired pattern by the photo-lithography process or the like. The head winding 10 constituted by a conduction layer is formed in a spiral configuration on the second magnetic layer 7 and the magnetic layer 8 through the insulating layer 9 by the photo-lithography process or the like. The third magnetic layer 11 is formed on the head winding 10 through the insulating layer 9 so as to cover the head winding 10. In this case, a thickness of the insulating layer 9 is made gradually smaller toward its front end facing the plane 13 opposing to the magnetic recording medium, so that the magnetic layer 8 for defining the width of the recording track is made closer to the third magnetic layer 11 with a desired gap width therebetween at the portion of the insulating layer 9 facing the plane 13. A part of the third magnetic layer 11 is connected at a rear end portion thereof apart from the plane 13 to the rear end portion of the second magnetic layer 7 through an opening provided to cross the insulating layer 9, whereby a closed magnetic circuit is formed by the second and third magnetic layers 7 and 11. The head winding 10 is wound around this connection portion of the second and third magnetic layers 7 and 11, whereby an induction type magnetic recording head is formed. In FIG. 6, reference numerals g1 and g2 represent the reproducing gap and the recording gap, respectively, and 12 represents the protection film. In a case of recording information on a magnetic recording medium by using the thus constituted composite type thin film magnetic head, induction current is applied to the head winding 10 to generate induction magnetic field from the recording gap g2 which is formed between the third magnetic layer 11 forming a thin film magnetic core and the magnetic layer 8 for defining the width of the recording track to thereby write information on the magnetic recording medium. In this case, when a width of the magnetic layer 8 for defining the width of the recording track in the track direction is set to be substantially same as the width W_{T} of the third magnetic layer 11, for example, as shown in FIG. 7, an amount of leakage of induction magnetic field generated upon recording operation can be decreased as shown in FIG. 8. In this respect, as described above, although an amount of leakage of magnetic field can be made minimum when the width of the magnetic layer 8 for defining the width of the recording track is set to be substantially same as the width of the third magnetic layer 11, a difference of the widths between the magnetic layer 8 and the third magnetic layer 11 is preferably required to be optimized in view of accuracy of positioning procedure of patterns in a process of forming these layers.

If the recording track width R_{T} of the MR element in the track direction is set to be smaller than the recording track width W_{T} as shown in FIG. 7, like the conventional composite type thin film magnetic head shown in FIGS. 2 to 4, the embodiment is advantageous in that a signal to noise ratio of a reproduced signal is high and that reproduction error due to mechanical positioning error between the head and the hard disk media of the hard disk driving apparatus is not likely generated.

Further, even if the lengths of the first and second magnetic layers 2 and 7 in the track direction are made long in order to ensure the shield effect of the MR type magnetic reproducing head upon reproduction, spread of the induction magnetic field upon recording operation can be surely prevented as shown in FIG. 8 because the width of the recording track is surely restricted to W_{T} by the magnetic layer 8 for defining the width of the recording track, as described above.

As described above, in accordance with the embodiment of the present invention, since the recording track width can be controlled or limited with high accuracy by preventing undesirable leakage of recording magnetic field, not only a signal to noise ratio upon reproduction can be improved but also the recording density of a magnetic head apparatus such as a hard disk driving apparatus can be improved or increased by increasing track density of a magnetic recording medium thereof.

Further, since the MR element 4 is provided to be extended in the direction perpendicular to the plane 13 opposing to the magnetic recording medium, only one of the electrodes 5 on the MR element 4 is exposed to the plane 13. As a consequence, such a phenomenon can be surely prevented that the electrodes 5 at the both ends of the MR element 4 contact with the surface of a magnetic recording medium such as a hard disk medium, for example, to thereby change a resistance value between the electrodes. Therefore, generation of noise can be suppressed.

Furthermore, since the MR element 4 is constituted by two magnetic layers, at least one of which having magnetoresistance effect, which are laminated through the non-magnetic intermediate layer disposed therebetween, the MR element 4 will be stable in view of magnetic energy when magnetizing states of the respective magnetic layers become inversely parallel. Consequently, no magnetic domain wall will be generated in these magnetic layers and so generation of magnetic domain is also prevented, whereby generation of noise due to Barkhausen effect can be decreased.

In this case, when the MR element 4 is constituted in a manner that its axis of easy magnetization is set to a direction perpendicular to signal magnetic field, if signal magnetic field is applied to an axis of hard magnetization thereof, magnetization direction of the element changes in the field direction. That is, the axis of hard magnetization of the element is set in the propagation direction of the magnetic flux, so that noise due to Barkhausen effect caused by movement of magnetic domain is surely prevented from being generated.

While the present invention is applied to the composite type thin film magnetic head to be mounted in a hard disk drive apparatus as described above, the present invention is not limited thereto and may be applied to other various types of magnetic heads.

As set out above, according to the present invention, in the composite type thin film magnetic head of two gap structure, since the recording track width can be controlled or limited with high accuracy by preventing undesirable leakage of recording magnetic field, not only a signal to noise ratio upon reproduction can be improved but recording density of a magnetic head apparatus such as a hard disk driving apparatus can be improved or increased by increasing track density of a magnetic recording medium thereof.

Further, since the MR element is provided so as to form a pattern extending in the direction perpendicular to the plane of the head opposing to the magnetic recording medium, not only change of a resistance value between the electrodes of the MR element can be reliably prevented but also generation of noise can be suppressed.

Furthermore, since the MR element is constituted by two magnetic layers, at least one of which having magnetoresistance effect, which are laminated through the non-magnetic intermediate layer, generation of magnetic domain is prevented and so generation of noise due to Barkhausen effect can be decreased.

Having described the preferred embodiment of the invention with reference to the accompanying drawings, it is to be understood that the invention is not limited to the precise embodiment and that various modification thereof could be effected by one skilled in the art without departing from the spirit of or scope of the invention as defined in the appended claims.

## Claims

1. A composite type thin film magnetic head in which a magnetoresistance effect type thin film magnetic reproducing head having a magnetoresistance effect element and an induction type magnetic recording head are laminated to form a reproducing gap and a recording gap separately, comprising:
a magnetic layer, provided close to the recording gap, for defining a width of a recording track of a magnetic recording medium.

2. A composite type thin film magnetic head according to claim 1, wherein said magnetoresistance effect element is extended in the direction perpendicular to a plane of the head opposing to the magnetic recording medium.

3. A composite type thin film magnetic head according to claim 1, wherein said magnetoresistance effect element is constituted by two magnetic layers, at least one of which having magnetoresistance effect, which are laminated through a non-magnetic intermediate layer disposed therebetween.

4. A composite type thin film magnetic head according to claim 1, wherein a width in a track direction of said magnetic layer for defining the width of the recording track is substantially same as a width in the track direction of one of magnetic layers constituting a magnetic core.
